# EUROPÄISCHE PATENTANMELDUNG

(11) **EP 0 833 541 A2**
(43) Veröffentlichungstag der Anmeldung: **01.04.1998**
(21) Anmeldenummer: 97116268.0
(22) Anmeldetag: 18.09.1997
(51) Int. Cl.: H04Q 7/38

(54) **Verfahren zum Wiederherstellen von teilnehmer- bzw. endgerätebezogenen Informationen im Datenbanksystem eines Mobilfunknetzes**

(30) Priorität: 30.09.1996 DE 19640233
(71) Anmelder: SIEMENS AKTIENGESELLSCHAFT, 80333 München (DE)
(72) Erfinder: Scotto di Carlo, Vincenzo, 81739 München (DE); Müller, Wilhelm, 85457 Wörth (DE); Karapetkov, Stefan, 81369 München (DE)

(57) **Zusammenfassung**

Bei einem Verfahren zum Wiederherstellen von teilnehmer- bzw. endgerätebezogenen Informationen im Datenbanksystem eines Mobilfunknetzes übermittelt eine Steuereinrichtung eines anderen Kommunikationsnetzes immer, wenn ein Teilnehmer bzw. dessen Endgerät zum ersten Mal innerhalb des anderen Kommunikationsnetzes erreichbar ist, teilnehmerbezogene bzw. endgerätebezogene Informationen an das Datenbanksystem des Mobilfunknetzes. Darüber hinaus übermittelt die Steuereinrichtung diese Informationen auch dann an das Datenbanksystem, wenn seit der letzten Übermittlung dieser Informationen mehr als eine bestimmte Zeitdauer verstrichen ist.

## Beschreibung

Die Erfindung betrifft ein Verfahren zum Wiederherstellen von teilnehmer- bzw. endgerätebezogenen Informationen nach einem Fehler in einem Datenbanksystem eines Mobilfunknetzes zum Speichern solcher Informationen für den Fall, daß ein Teilnehmer oder ein Endgerät sowohl über das Mobilfunknetz, als auch über ein anderes Kommunikationsnetz erreichbar sein kann und vom aktuellen Aufenthaltsort des Teilnehmers bzw. Endgerätes abhängige Informationen wiederherzustellen sein könnten. Solche teilnehmer- bzw. endgerätebezogenen Informationen können beispielsweise Informationen über die aktuelle Erreichbarkeit eines Teilnehmers bzw. Endgeräts sein oder aktuelle endgerätespezifische Leistungsmerkmaleinstellungen.

Aus dem Buch von M. Mouly, M.B. Pautet, "The GSM System for Mobile Communications", 1992, F-91120 Paliseau ist insbesondere auf den Seiten 470 bis 473 das Aktualisieren der Datenbasis des Aufenthaltsortes von Endgeräten in einem Mobilfunknetz sowie das Wiederherstellen von teilnehmerbezogenen bzw. endgerätebezogenen Informationen innerhalb einer Datenbasis nach einem Störfall beschrieben. Hierbei werden nur Informationen über die Erreichbarkeit eines Teilnehmers bzw. Endgerätes innerhalb des Mobilfunknetzes gespeichert bzw. wiederhergestellt. Bei dem hier beschriebenen Verfahren zum Wiederherstellen von Informationen über den Aufenthaltsort eines Endgerätes innerhalb des Mobilfunknetzes werden in einem ersten Schritt die unsicheren, also potentiell falschen Informationen als solche markiert. Dann werden andere Einheiten des Mobilfunknetzes von dem unsicheren Zustand dieser Informationen unterrichtet, woraufhin auch diese Einheiten die entsprechenden Informationen als unsicher markieren. Um die Signalisierungsbelastung des Kommunikationsnetzes möglichst wenig zu belasten, werden die unsicheren Daten nur dann wiederhergestellt bzw. korrigiert, wenn ein den Teilnehmer bzw. das Endgerät betreffendes Ereignis auftritt, wie z.B. ein von dem Endgerät initialisierter Funkkontakt. Um einen solchen Funkkontakt innerhalb einer bestimmten Zeitspanne sicherzustellen, wird die Information über den Aufenthaltsort des Teilnehmers bzw. des Endgerätes periodisch, beispielsweise einmal täglich, aktualisiert. Das bekannte Verfahren, das nur innerhalb eines Mobilfunknetzes angewandt wird, setzt voraus, daß eine Einheit, die beispielsweise eine Information über den aktuellen Aufenthaltsort eines Endgerätes bereitstellen kann, eine Mitteilung darüber erhält, daß die entsprechenden Daten aufgrund eines Fehlerfalles evtl. nicht korrekt sind. Wenn eine solche Mitteilung vorliegt, werden diese Daten aktualisiert, d.h. korrigiert, falls eine bestimmte Aktion bezüglich des Endgerätes auftritt. Um eine solche Aktion innerhalb einer bestimmten Zeitdauer sicherzustellen, ist es bekannt, einen periodischen Funkkontakt zu veranlassen.

Aufgabe der vorliegenden Erfindung ist es, ein Verfahren zum Wiederherstellen von teilnehmerbezogenen bzw. endgerätebezogenen Informationen nach einem Fehler in einem Datenbanksystem eines Mobilfunknetzes zum Speichern solcher Informationen für den Fall bereitzustellen, daß ein Teilnehmer bzw. Endgerät sowohl über das Mobilfunknetz als auch über ein anderes Kommunikationsnetz erreichbar ist, wobei vom aktuellen Aufenthaltsort des Teilnehmers bzw. Endgerätes abhängige Informationen wiederherzustellen sein könnten.

Diese Aufgabe löst die Erfindung durch ein Verfahren mit den Merkmalen des Anspruches 1. Eine günstige Ausgestaltungsform eines solchen Verfahrens ist Gegenstand des Anspruches 2. Erfindungsgemäß übermittelt eine Steuereinrichtung in dem anderen Kommunikationsnetz immer, wenn ein Teilnehmer bzw. dessen Endgerät zum ersten Mal innerhalb des anderen Kommunikationsnetzes erreichbar ist, teilnehmerbezogene bzw. endgerätebezogene Informationen an das Datenbanksystem des Mobilfunknetzes. Darüber hinaus übermittelt die Steuereinrichtung diese Informationen auch dann an das Datenbanksystem, wenn seit der letzten Übermittlung dieser Informationen mehr als eine bestimmte Zeitdauer verstrichen ist.

Durch das Übermitteln der Informationen an das Datenbanksystem des Mobilfunknetzes, sobald der Teilnehmer bzw. sein Endgerät zum ersten Mal innerhalb des anderen Kommunikationsnetzes erreichbar ist, stellt sicher, daß die Datenbasis im Datenbanksystem des Mobilfunknetzes abhängig von auftretenden Änderungen aktualisiert wird und daß die Datenbasis außerdem regelmäßig, und zwar unabhängig von einem Hinweis über evtl. vorliegende Fehler der Datenbasis, überprüft bzw. aktualisiert wird.

In einer besonderen Ausgestaltungsform eines erfindungsgemäßen Verfahrens überprüft die Steuereinrichtung bei jeder Aktion zwischen dem Teilnehmer bzw. dem Endgerät und dem anderen Kommunikationsnetz, ob seit der letzten Übermittlung der teilnehmerbezogenen bzw. endgerätebezogenen Informationen an das Datenbanksystem des Mobilfunknetzes eine vorbestimmte Zeitdauer abgelaufen ist. Abhängig vom Ergebnis dieser Überprüfung nimmt die Steuereinrichtung eine Übermittlung der entsprechenden Informationen zu dem Datenbanksystem des Mobilfunknetzes vor.

Das zuletzt genannte Ausführungsbeispiel eines erfindungsgemäßen Verfahrens sorgt dafür, daß möglichst wenig unnötige Signalisierung zum Wiederherstellen von Informationen im Datenbanksystem vorgenommen wird. Die teilnehmerbezogenen bzw. endgerätebezogenen Informationen werden nämlich nur dann von dem anderen Kommunikationsnetz zum Mobilfunknetz übermittelt, wenn zwischen dem Teilnehmer bzw. Endgerät und dem anderen Kommunikationsnetz eine Aktion stattfindet und wenn seit dem letzten Übermitteln der genannten Information eine bestimmte Zeitdauer verstrichen ist. Wenn keine Aktion zwischen dem Teilnehmer bzw. dem Endgerät und dem anderen Kommunikationsnetz auftritt, ist davon auszugehen, daß der Teilnehmer mit hoher Wahrscheinlichkeit nicht in diesem Kommunikationsnetz erreichbar ist. Folglich ist eine Übermittlung der genannten Informationen von diesem anderen Kommunikationsnetz zum Mobilfunknetz zu diesem Zeitpunkt nicht erforderlich, auch wenn die letzte Übermittlung schon vor längerer Zeit stattgefunden hat.

Nachstehend wird die Erfindung anhand eines Ausführungsbeispiels unter Bezugnahme auf die Figur näher erläutert.

Die Figur zeigt das Flußdiagramm einer Ablaufsteuerung als Teil eines erfindungsgemäßen Verfahrens.

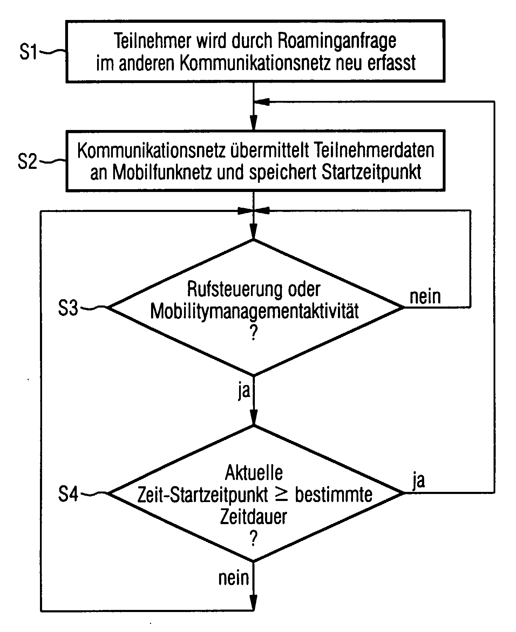

Die Figur zeigt das Flußdiagramm einer Ablaufsteuerung einer Ausgestaltungsform eines erfindungsgemäßen Verfahrens für den Fall, daß der Teilnehmer in dem anderen Kommunikationsnetz über ein Schnurlostelefon oder ein Funktelefon erreichbar ist. Wenn in einem Ablauf gemäß Fig. 1 in dem Schritt S1 der Teilnehmer infolge einer Roaming-Anfrage seines Endgerätes im anderen Kommunikationsnetz neu erfaßt wird, übermittelt die Steuereinrichtung dieses anderen Kommunikationsnetzes Teilnehmerdaten mit teilnehmer- bzw. endgerätebezogenen Informationen an das Mobilfunknetz und speichert außerdem die aktuelle Zeit als Startzeit. Daraufhin geht die Steuereinrichtung zu Schritt S3 um zu überprüfen, ob bezüglich des Endgerätes bzw. des Teilnehmers ein Rufsteuerungsablauf erfolgt ist oder eine Mobility-Management-Aktivität. Ist kein Rufsteuerungsablauf und kein Mobilitätssteuerablauf erfolgt, so liefert die Abfrage aus Schritt S3 ein NEIN und der Steuerablauf der Steuereinrichtung geht wieder an den Anfang von Schritt S3 zurück. Liefert die Abfrage aus Schritt S3 ein JA, so geht der Steuerablauf der Steuereinrichtung zu Schritt S4, in dem überprüft wird, ob die Differenz zwischen der aktuellen Zeit und dem gespeicherten Startzeitpunkt größer oder gleich der bestimmten Zeitdauer ist. Ist dies nicht der Fall, so geht die Steuerung zum Anfang des Schrittes S3 zurück. Wenn jedoch seit dem letzten Übermitteln von Teilnehmerdaten an das Mobilfunknetz mehr als eine bestimmte Zeitdauer verstrichen ist, die aktuelle Zeit abzüglich dem in Schritt S2 gespeicherten Startzeitpunkt also größer als diese bestimmte Zeitdauer ist, geht die Steuerung zum Anfang von Schritt S2 zurück, um Teilnehmerdaten an das Mobilfunknetz zu übermitteln und den aktuellen Zeitpunkt als neuen Startzeitpunkt zu speichern.

## Patentansprüche

1. Verfahren zum Wiederherstellen von teilnehmer bzw. endgerätebezogenen Informationen nach einem Fehler in einem Datenbanksystem eines Mobilfunknetzes zum Speichern solcher Informationen für den Fall, daß ein Teilnehmer bzw. Endgerät sowohl über das Mobilfunknetz, als auch über ein anderes Kommunikationsnetz erreichbar sein kann und vom aktuellen Aufenthaltsort des Teilnehmers bzw. Endgerätes abhängige Informationen wiederherzustellen sein könnten, dadurch **gekennzeichnet**, daß eine Steuereinrichtung in dem anderen Kommunikationsnetz immer, wenn ein Teilnehmer bzw. Endgerät zum erstenmal innerhalb des anderen Kommunikationsnetzes erreichbar ist teilnehmer bzw. endgerätebezogene Informationen an das Datenbanksystem des Mobilfunknetzes übermittelt und daß die Steuereinrichtung diese Informationen außerdem an dieses Datenbanksystem übermittelt, wenn seit der letzten Übermittlung dieser Informationen mehr als eine bestimmte Zeitdauer verstrichen ist.

2. Verfahren nach Anspruch 1, dadurch **gekennzeichnet**, daß die Steuereinrichtung bei jeder Aktion zwischen dem Teilnehmer-/Endgerät und dem anderen Kommunikationsnetz überprüft, ob seit der letzten Übermittlung der teilnehmer-/endgerätebezogenen Informationen an das Datenbanksystem des Mobilfunknetzes eine vorbestimmte Zeitdauer überschritten ist und daß die Steuereinrichtung abhängig hiervon eine Übermittlung teilnehmer-/endgerätebezogener Informationen vornimmt.
